# EUROPÄISCHE PATENTSCHRIFT

(11) **EP 3 938 947 B1**
(45) Veröffentlichungstag und Bekanntmachung des Hinweises auf die Patenterteilung: **09.07.2025**
(21) Anmeldenummer: 20706943.6
(22) Anmeldetag: 06.02.2020
(51) Int. Cl.: G06F 18/2433, G06V 10/764, G06V 10/82

(54) **VERFAHREN UND VORRICHTUNG ZUM ERMITTELN EINER GEFAHRENQUELLE AUF EINER FAHRBAHN**
METHOD AND DEVICE FOR DETERMINING A DANGER SOURCE ON A ROADWAY
PROCÉDÉ ET DISPOSITIF POUR LA DÉTERMINATION D'UNE SOURCE DE DANGER SUR UNE VOIE DE CIRCULATION

(30) Priorität: 15.03.2019 DE 102019106625
(43) Veröffentlichungstag der Anmeldung: 19.01.2022
(73) Patentinhaber: Car.Software Estonia AS, 11415 Tallinn (EE)
(72) Erfinder: BRUCH, Anton, 12049 Berlin (DE); DIEGMANN, Fabian, 10439 Berlin (DE)
(74) Vertreter: Schaumburg und Partner Patentanwälte mbB
(86) Internationale Anmeldenummer: PCT/EP2020/052930
(87) Internationale Veröffentlichungsnummer: WO 2020/187483

(56) Entgegenhaltungen:
- PARK SOMIN ET AL: "Patch-based crack detection in black box road images using deep learning", 35TH INTERNATIONAL SYMPOSIUM ON AUTOMATION AND ROBOTICS IN CONSTRUCTION (ISARC 2018); BERLIN, GERMANY; JULY 22-25, 2018,, vol. 35, 30 November 2017 (2017-11-30), pages 1 - 4, XP009537879, ISBN: 978-3-00-060855-1, DOI: 10.22260/ISARC2018/0104
- CREUSOT CLEMENT ET AL: "Real-time small obstacle detection on highways using compressive RBM road reconstruction", 2015 IEEE INTELLIGENT VEHICLES SYMPOSIUM (IV), IEEE, 28 June 2015 (2015-06-28), pages 162 - 167, XP033209720, DOI: 10.1109/IVS.2015.7225680
- DEEPIKA N ET AL: "Obstacle classification and detection for vision based navigation for autonomous driving", 2017 INTERNATIONAL CONFERENCE ON ADVANCES IN COMPUTING, COMMUNICATIONS AND INFORMATICS (ICACCI), IEEE, 13 September 2017 (2017-09-13), pages 2092 - 2097, XP033276260, DOI: 10.1109/ICACCI.2017.8126154

## Beschreibung

Die Erfindung betrifft ein Verfahren zum Ermitteln einer Gefahrenquelle auf einer Fahrbahn in einem Erfassungsbereich vor oder hinter einem Fahrzeug, insbesondere eines Straßenfahrzeugs, mittels einer Kamera des Fahrzeugs. Die Erfindung betrifft ferner eine Vorrichtung zum Ermitteln einer Gefahrenquelle auf einer Fahrbahn in einem Erfassungsbereich.

Im Bereich des autonomen Fahrens sowie bei Fahrerassistenzsystem sollen Bilddaten von Bildern, die durch eine an einem Fahrzeug befestige Kamera aufgenommenen werden, verarbeitet werden, um eine Gefahrenquelle auf einer Fahrbahn in einem Erfassungsbereich vor oder hinter dem Fahrzeug zu detektieren. Eine mögliche Gefahrenquelle sind Gegenstände, wie beispielsweise eine verlorene Ladung oder ein Auspuffrohr, oder eine Person auf der Fahrbahn. Weitere Gefahrenquellen auf der Fahrbahn sind beispielsweise Schlaglöcher, Eisplatten oder Wasserfilme, die Aquaplaning auslösen können.

Bisher bekannte auf neuronalen Netzwerken basierende Verfahren, wie beispielsweise MonoDepth oder Semantic Segmentation, können derartige Gefahrenquellen aufgrund fehlender Trainingsdaten nicht klassifizieren und damit auch nicht detektieren. In typischen Verkehrssituationen treten diese Gefahrenquellen zu selten auf, um einen geeigneten Datensatz zum Trainieren der neuronalen Netzwerke zu erzeugen.

Verfahren, die auf dem optischen Fluss einer Sequenz von Bildern des Erfassungsbereichs basieren, sind nur bei zu geringen Entfernungen zwischen dem Fahrzeug und der Gefahrenquelle anwendbar. Darüber hinaus sind derartige Verfahren sehr rechenintesiv.

Aus dem Dokument Andrews et al., Transfer Representation-Learning for Anomaly Detection, Proceedings oft he 33rd Internation Conference on Machine Learning, sind zwei Verfahren zum Detektieren von Anomalien in einem Datensatz bekannt. Bei beiden Verfahren wird die Ausgabe einer Zwischenschicht eines neuronalen Netzwerks verwendet, um mittels einer Support Vector Machine eine Detektion von Anomalien vorzunehmen. Das bei dem ersten Verfahren verwendete neuronale Netzwerk wurde unter Verwendung eines anderen als dem zu klassifizierenden Datensatzes trainiert. Bei dem zweiten Verfahren wird ein neuronales Netzwerk verwendet, das mittels eines Teils des zu klassifizierenden Datensatzes trainiert wurde, der keine Anomalien enthält.

Aus dem Dokument Badrinarayanan et al., SegNet: A Deep Convolutional Encoder-Decoder Architecture for Image Segmentation, arXiv:1511.00561v3, ist ein Verfahren zur semantischen Klassifizierung von Bildpunkten unter Verwendung eines neuronalen Netzwerks bekannt. Das verwendete neuronale Netzwerk umfasst ein Encoder Netzwerk, das eine semantische Segmentierung eines Bildes in verschiedene Bildbereiche vornimmt und ein Decoder Netzwerk, das Parameter des Encoder Netzwerks nutzt, um einzelnen Bildpunkten jeweils einen der Bildbereiche zuzuordnen.

Aus dem Dokument Chalapathy et al., Anomaly Detection using One-Class Neural Networks, arXiv:1802.06360v1, ist ein Verfahren zum Detektieren von Anomalien in einem komplexen Datensatz bekannt. Das verwendete neuronale Netzwerk umfasst ein Encoder Netzwerk mit festen Gewichten, das den Datensatz klassifiziert, und ein dem Encoder Netzwerk nachgeschaltetes Feedforward-Netz, das spezifisch ausgebildet ist, in dem klassifizierten Datensatz Anomalien zu detektieren.

Zum Stand der Technik wird zu dem auf Deepika N et al.: "Obstacle classification and detection for vision based navigation for autonomous driving", 2017 International Conference on Advances in Computing, Communications and Informatics (ICACCI), IEEE, 13. September 2017 (2017-09-13), Seiten 2092-2097, XP033276260, DOI: 10.110 9/ I CAC C 1.2017.8126154 verwiesen. Dort ist ein eine Versuchsplattform für autonomes Fahren offenbart. Die Versuchsplattform umfasst eine Kamera und ist dazu ausgebildet, auf Grundlage eines von der Kamera erfassten Bildes ein Verfahren zu Hinderniserkennung durchzuführen.

Es wird ferner auf das folgende Dokument verwiesen Park Somin et al.: "Patch-based crack detection in black box road images using deep learning", 35th International Symposium on Automation and Robotics in Construction (ISARC 2018); BERLIN, GERMANY; JULY 22-25, 2018, Bd. 35, 30. November 2017 (2017-11-30), Seiten 1-4, XP009537879, DOI: 10.22260/ISARC2018/0104 ISBN: 978-3-00-060855-1.

Es ist Aufgabe der Erfindung, ein Verfahren und eine Vorrichtung anzugeben, durch die das Ermitteln einer Gefahrenquelle auf einer Fahrbahn in einem Erfassungsbereich vor oder hinter einem Fahrzeug mittels einer Kamera des Fahrzeugs einfach möglich ist.

Die Aufgabe wird durch ein Verfahren mit den Merkmalen des Anspruchs 1 und durch eine Vorrichtung mit den Merkmalen des Anspruchs 10 gelöst. Vorteilhafte Weiterbildungen sind in den abhängigen Ansprüchen angegeben.

Die Kamera ist vorzugsweise fest mit dem Fahrzeug verbunden. Die Fahrbahn kann insbesondere eine Straße sein. Das Fahrzeug ist insbesondere ein Straßenfahrzeug. Die Gefahrenquelle ist insbesondere ein Gegenstand, wie beispielsweise eine verlorene Ladung oder ein Auspuffrohr, oder eine Person auf der Fahrbahn. Gefahrenquelle können ferner sein ein Schlagloch, eine Eisplatte oder ein Wasserfilm, der Aquaplaning auslösen kann.

Zum Ermitteln der Gefahrenquelle auf der Fahrbahn in dem Erfassungsbereich wird bei dem Verfahren nach Anspruch 1 zunächst der erste Bildbereich genutzt, um die Suche nach der Gefahrenquelle auf einen bestimmten Teilbereich des Erfassungsbereichs einzuschränken. Das neuronale Netzwerk ermittelt dabei unter Verwendung der Bilddaten eine Darstellung des Bildes, insbesondere in Form einer Matrix von Merkmalsvektoren. Diese Darstellung wird zur Klassifizierung von Bildbereichen des Bildes verwendet. Unter Verwendung der Darstellung wird so der erste Bildbereich ermittelt. Der erste Bildbereich entspricht dabei der Fahrbahn in dem Erfassungsbereich. Ferner wird, beispielsweise mittels einer Ausgabeinformation einer Zwischenschicht des neuronalen Netzwerks im ersten Bildbereich, der zweite Bildbereich des Bildes ermittelt. Dies erfolgt insbesondere unter Verwendung desselben neuronalen Netzwerks, das auch zum Ermitteln des ersten Bereichs verwendet wird. Der zweite Bildbereich entspricht der Gefahrenquelle im Erfassungsbereich auf der Fahrbahn.

Bei dem Verfahren nach Anspruch 1 ist zum Detektieren der Gefahrenquelle nur ein einziges Bild des Erfassungsbereichs erforderlich. Insbesondere muss es sich bei diesem einen Bild nicht um ein stereoskopisches Bild handeln. Zum Durchführen des Verfahrens ist somit nur eine Monokamera, d.h. eine Kamera, die ein einziges Objektiv aufweist und nur nichtstereoskopische Bilder erfassen kann, erforderlich. Das erfindungsgemäße Verfahren ist somit einfach durchzuführen.

Mithilfe des ersten Bildbereichs wird unter Verwendung einer Ausgabeinformation einer Zwischenschicht des neuronalen Netzwerks der zweite Bildbereich ermittelt. Die Zwischenschicht ist vorzugweise eine Schicht eines Encoder Netzwerks des neuronalen Netzwerks. Die Gefahrenquelle ist in dem ersten Bildbereich, der im Wesentlichen nur die Fahrbahn in dem Erfassungsbereich umfasst, eine Anomalie, d.h. ein unerwartetes oder atypisches Muster. Aus dem Dokument Andrews et al., Transfer Representation-Learning for Anomaly Detection, Proceedings of the 33rd Internation Conference on Machine Learning, ist bekannt, dass die Ausgabe einer Zwischenschicht eines neuronalen Netzwerks zum Detektieren von Anomalien in einem Datensatz verwendet werden kann. Diese Eigenschaft neuronaler Netzwerke wird in der bevorzugten

Ausführungsform genutzt, um mittels des gleichen neuronalen Netzwerks sowohl den ersten Bereich zu ermitteln als auch in den dem ersten Bildbereich entsprechenden Bilddaten die Gefahrenquelle zu detektieren. Das Verfahren ist hierdurch besonders einfach durchzuführen, da nur ein einziges neuronales Netzwerk benötigt wird.

Mittels der Bilddaten wird unter Verwendung des neuronalen Netzwerks für jeden Bildpunkt des Bildes jeweils ein erster Merkmalsvektor ermittelt und mittels dieser ersten Merkmalsvektoren der erste Bildbereich ermittelt. Die Bildpunkte des Bildes werden unter Verwendung der ersten Merkmalsvektoren klassifiziert. Diese Klassifizierung wird genutzt, um eine semantische Segmentierung, d.h. eine Einteilung des Bildes in inhaltlich zusammenhängende Bereiche, des Bildes durchzuführen und so den ersten Bildbereich zu ermitteln. Unter Merkmalsvektor wird in der vorliegenden Anmeldung sowohl die Ausgabeinformation eines neuronalen Netzwerks selbst als auch die Ausgabeinformation einer Zwischenschicht des neuronalen Netzwerks verstanden.

Unter Verwendung des neuronalen Netzwerks werden zweite Merkmalsvektoren ermittelt und mittels dieser zweiten Merkmalsvektoren wird der zweite Bildbereich ermittelt. Insbesondere wird zum Ermitteln der zweiten Merkmalsvektoren eine Ausgabeinformation einer Zwischenschicht des neuronalen Netzwerks verwendet. Alternativ oder zusätzlich wird unter Verwendung des neuronalen Netzwerks für vorbestimmte Teilbereiche des ersten Bildbereichs jeweils ein zweiter Merkmalsvektor ermittelt. Die dem ersten Bildbereich zugeordneten Bildpunkte werden unter Verwendung der zweiten Merkmalsvektoren klassifiziert. Diese Klassifizierung wird genutzt, um den zweiten Bildbereich und damit die Gefahrenquelle zu ermitteln.

Unter Verwendung des neuronalen Netzwerks für den ersten Bildbereich zweite Merkmalsvektoren ermittelt. Es wird zum Ermitteln der zweiten Merkmalsvektoren eine Ausgabeinformation einer Zwischenschicht des neuronalen Netzwerks verwendet. Es wird ein Mittelwert der den Bildpunkten des ersten Bildbereichs zugeordneten zweiten Merkmalsvektoren ermittelt. Für jeden der zweiten Merkmalsvektoren wird die Differenz zwischen diesem Mittelwert und dem jeweiligen zweiten Merkmalsvektor gebildet. Liegt der Wert dieser Differenz über, unter oder auf einem vorbestimmten Schwellenwert, wird ein dem jeweiligen zweiten Merkmalsvektor zugeordnete vorbestimmte Teilbereich des Bilds dem zweiten Bildbereich zugeordnet. Diese Differenz ist vorzugsweise gewichtetet. Insbesondere Abweichungen von dem Mittelwert, die über, unter der auf einem vorbestimmten Schwellenwert liegen deuten auf eine Anomalie, d.h. hier konkret die Gefahrenquelle, hin und können zur Klassifikation von Bildpunkten des ersten Bildbereichs verwendet werden. Mittels dieser Klassifizierung kann somit der zweite Bildbereich, welcher der Gefahrenquelle entspricht, ermittelt werden.

Insbesondere wird mithilfe des ersten Bildbereichs unter Verwendung einer Ausgabeinformation eines Encoder Netzwerks des neuronalen Netzwerks der zweite Bildbereich ermittelt. Das Encoder Netzwerk ermittelt eine Darstellung des ersten Bildbereichs, insbesondere in Form einer Matrix von Merkmalsvektoren. Diese Darstellung wird zur Klassifizierung von vorbestimmten Teilbereichen des Bildes verwendet. Die Größe der vorbestimmten Teilbereiche hängt insbesondere von dem Verhältnis der Auflösung des Bildes zu der Auflösung der Darstellung ab. Unter Verwendung dieser Darstellung kann so der zweite Bildbereich besonders einfach ermittelt werden. Vorzugsweise wird zum Ermitteln des zweiten Bildbereichs nur ein Teil des Encoder Netzwerks verwendet, beispielsweise eine Zwischenschicht des Encoder Netzwerks.

Vorzugsweise werden mittels der Bilddaten unter Verwendung eines Decoder Netzwerks des neuronalen Netzwerks dem ersten Bereich zugeordnete Bildpunkte des Bildes ermittelt. Das Decoder Netzwerk ermittelt insbesondere unter Verwendung der durch das Encoder Netzwerk ermittelten Darstellung die dem ersten Bereich zugeordneten Bildpunkte des Bildes. Das Decoder Netzwerk erhöht die Auflösung der durch das Encoder Netzwerk ermittelten Darstellung wieder, so dass dem ersten Bildbereich Bildpunkte des Bildes zugeordnet werden können.

Es ist besonders vorteilhaft, wenn das neuronale Netzwerk ein faltendes neuronales Netzwerk ist. Faltende neuronale Netzwerke, die auch Convolutional Neural Networks (CNN) genannt werden, bestehen im Allgemeinen aus mehreren Faltungsschichten (Convolutional Layer) und Pooling-Schichten (Pooling Layer). Als Eingabe in faltende neuronale Netzwerke werden üblicherweise in Matrizen angeordnete Bildpunkte von Bildern verwendet. Diese Matrizen werden in den Faltungsschichten jeweils mit einer Faltungsmatrix oder einem Filterkernel gefaltet. In den Pooling-Schichten wird jeweils die Auflösung einer der Ausgaben der Faltungsschichten reduziert, um Speicherbedarf zu reduzieren und Rechenzeit einzusparen. Insbesondere in der Bilderkennung haben faltende neuronale Netzwerke eine sehr geringe Fehlerquote.

Vorzugsweise wurde das neuronale Netzwerk mittels Bildern realer, insbesondere typischer, Verkehrssituationen trainiert wurde, die mittels einer Kamera eines weiteren Fahrzeugs oder des Fahrzeugs aufgenommenen worden sind.

In einer vorteilhaften Weiterbildung wird mittels der Bilddaten ein die Gefahrenquelle umgebender Hüllkörper ermittelt. Die Position des Hüllkörpers wird vorzugsweise in dreidimensionalen Koordinaten, insbesondere in fahrzeugfesten Koordinaten oder in ortsfesten Koordinaten ermittelt. Bei dem Hüllkörper handelt es sich insbesondere um einen die Gefahrenquelle umgebenden Quader. Der Hüllkörper kann beispielsweise verwendet werden, um die Gefahrenquelle zu umfahren oder einen Bremsvorgang des Fahrzeugs einzuleiten.

In einer vorteilhaften Weiterbildung wird die Gefahrenquelle mittels der Bilddaten unter Verwendung eines Bilderkennungsverfahrens, insbesondere eines weiteren neuronalen Netzwerks, klassifiziert. Hierdurch kann zwischen verschiedenen Gefahrenquellen unterscheiden und somit die Genauigkeit des Verfahrens erhöht werden

Das vorgenannte Verfahren kann insbesondere von einem autonom fahrenden Fahrzeug verwendet werden, das beispielweise auf Grundlage der erfassten Gefahrenquelle einen Ausweichvorgang, einen Bremsvorgang oder einen Notbremsvorgang einleitet. Ferner kann das vorgenannte Verfahren von einem Fahrerassistenzsystem verwendet werden, das beispielweise auf die erfassten Gefahren aufmerksam macht oder auf Grundlage der erfassten Gefahrenquelle selbstständig einen Bremsvorgang einleitet.

Die Erfindung betrifft ferner eine Vorrichtung zum Ermitteln einer Gefahrenquelle auf einer Fahrbahn in einem Erfassungsbereich vor oder hinter einem Fahrzeug, insbesondere eines Straßenfahrzeugs, mit den Merkmalen des unabhängigen Vorrichtungsanspruchs. Die Vorrichtung hat dieselben Vorteile wie das beanspruchte Verfahren und kann auf die gleiche Wiese, insbesondere mit den Merkmalen der abhängigen Ansprüche, weitergebildet werden.

Weitere Merkmale und Vorteile ergeben sich aus der folgenden Beschreibung, die mehrere Ausführungsformen in Verbindung mit den beigefügten Figuren näher erläutert.

Es zeigen:
- Figur 1: ein Fahrzeug mit einer Vorrichtung zum Ermitteln einer Gefahrenquelle auf einer Fahrbahn mittels einer Kamera;
- Figur 2: ein Flussdiagramm eines Ablaufs zum Ermitteln einer Gefahrenquelle auf einer Fahrbahn mittels einer Kamera;
- Figur 3: ein Flussdiagramm eines detaillierten Ablaufs zum Ermitteln eines ersten Bereichs auf der Fahrbahn;
- Figur 4: ein Flussdiagramm eines detaillierten Ablaufs zum Ermitteln eines zweiten Bereichs auf der Fahrbahn;
- Figur 5: eine schematische Darstellung eines Bildes eines Erfassungsbereichs, in der der erste Bereich hervorgehoben ist;
- Figur 6: eine weitere schematische Darstellung des Bildes des Erfassungsbereichs, in der der zweite Bereich hervorgehoben ist; und
- Figur 7: eine schematische Darstellung eines neuronalen Netzwerks.

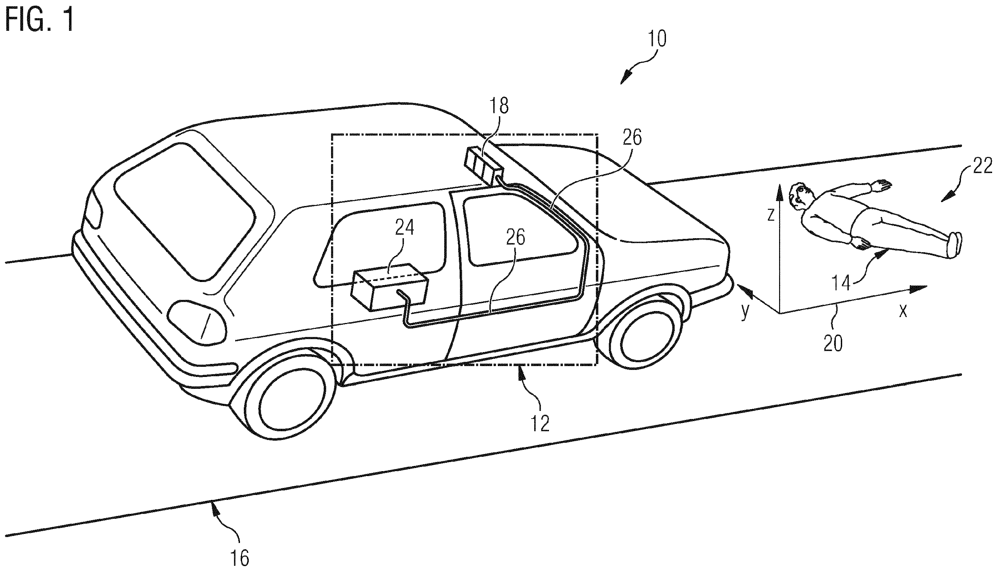

Figur 1 zeigt ein Fahrzeug 10 mit einer Vorrichtung 12 zum Ermitteln einer Gefahrenquelle 14 auf einer Fahrbahn 16 mittels einer Kamera 18. Das Fahrzeug 10 ist bei der gezeigten Ausführungsform als ein Personenkraftwagen ausgebildet.

Figur 1 zeigt ferner ein Koordinatenkreuz 20 eines ortsfesten Koordinatensystems. Eine erste Koordinatenachse X verläuft parallel zur Fahrbahn 14 und in Fahrtrichtung des Fahrzeugs 10. Eine zweite Koordinatenachse Y verläuft ebenfalls parallel zur Fahrbahn 14, ist senkrecht zur ersten Koordinatenachse X. Die zweite Koordinatenachse Y verläuft quer zur Fahrtrichtung des Fahrzeugs 10. Eine dritte Koordinatenachse Z zeigt nach oben und ist senkrecht zur von der ersten Koordinatenachse X und der zweiten Koordinatenachse Y aufgespannten Ebene.

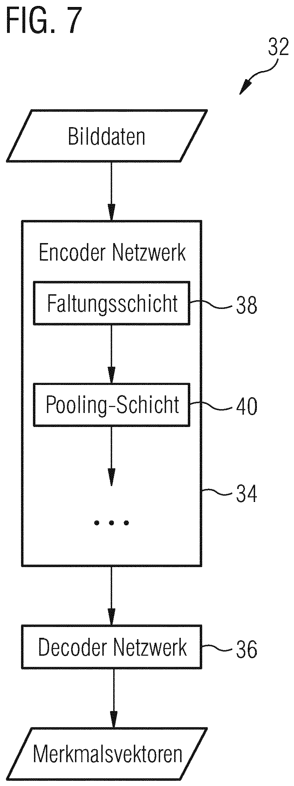

Die Vorrichtung 12 umfasst die Kamera 18, die fest mit dem Fahrzeug 10 verbunden ist. Die Kamera 18 ist derart in Fahrtrichtung des Fahrzeugs 10 bzw. in Richtung der ersten Koordinatenachse X ausgerichtet, dass sie einen Erfassungsbereich 22 auf der Fahrbahn 16 vor dem Fahrzeug 10 erfassen kann. Die Vorrichtung 12 umfasst ferner eine Bildverarbeitungs- und Auswerteeinheit 24, die über ein Kabel 26 mit der Kamera 18 verbunden ist. Alternativ kann sich die Auswerteeinheit 24 auch außerhalb des Fahrzeugs 10 befinden, zum Beispiel in einem externen Server. Die Bildverarbeitungs- und Auswerteeinheit 24 ist ausgebildet mittels Bilddaten, die einem durch die Kamera 18 aufgenommenen Bild des Erfassungsbereichs 22 entsprechen, unter Verwendung eines neuronalen Netzwerks 32 (Figur 7) einen ersten Bildbereich des Bildes zu ermitteln, welcher der Fahrbahn 16 in dem Erfassungsbereich 22 entspricht, mittels dem ersten Bildbereich entsprechenden Bilddaten unter Verwendung des neuronalen Netzwerks 32 einen zweiten Bildbereich des Bildes zu ermitteln, welcher der Gefahrenquelle 14 auf der Fahrbahn 16 in dem Erfassungsbereich 22 entspricht. Das neuronale Netzwerk 32 umfasst ein Encoder Netzwerk 34 und ein Decoder Netzwerk 36 und wird in Verbindung mit Figur 7 weiter unten noch näher beschrieben.

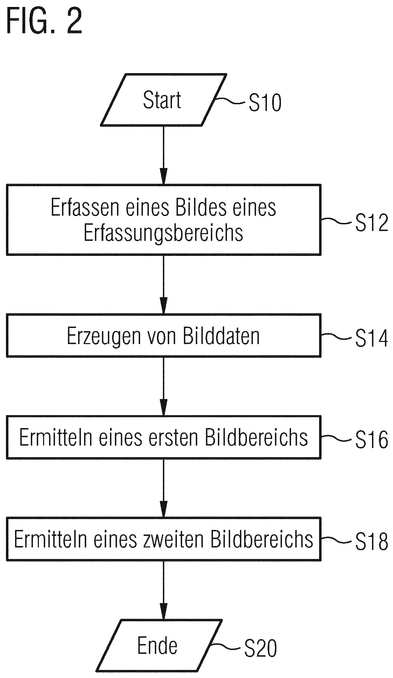

Figur 2 zeigt ein Flussdiagramm eines Verfahrens zum Ermitteln der Gefahrenquelle 14 in dem Erfassungsbereich 22 der Kamera 18 auf der Fahrbahn 16 gemäß einer Ausführungsform.

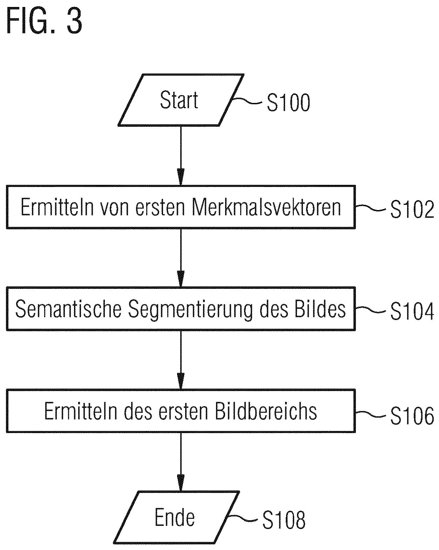

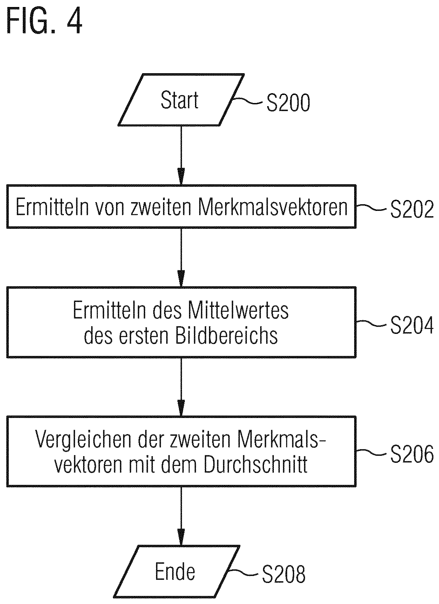

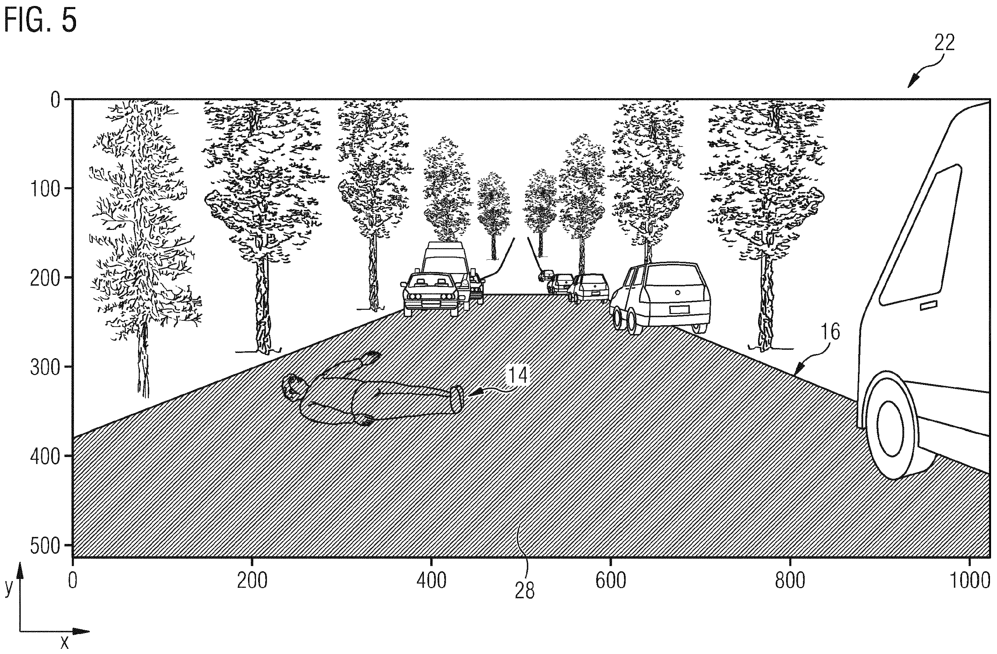

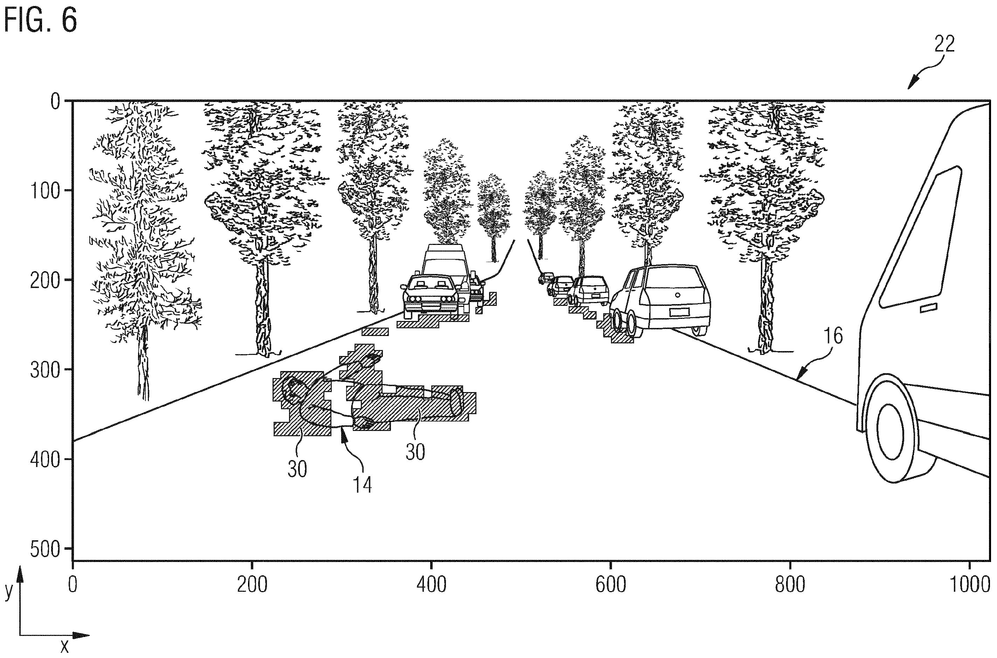

Im Schritt S10 wird der Ablauf gestartet. Anschließend wird im Schritt S12 mittels der Kamera 18 ein Bild des Erfassungsbereichs 22 erfasst. Anschließend werden im Schritt S14 dem Bild zugeordnete Bilddaten erzeugt. Nachfolgend wird im Schritt S16 mittels der Bilddaten unter Verwendung des neuronalen Netzwerks 32 ein erster Bildbereich 28 des Bildes ermittelt. Hierzu werden alle Schichten des neuronalen Netzwerks 32 verwendet. Der erste Bildbereich 28 entspricht dabei der Fahrbahn 16 in dem Erfassungsbereich 22 und ist in Figur 5 gezeigt. Der Schritt S16 wird nachfolgend in Verbindung mit Figur 3 weiter unten noch näher erläutert. Im Schritt S18 wird mittels dem ersten Bildbereich 28 entsprechenden Bilddaten unter Verwendung des neuronalen Netzwerks 32 ein zweiter Bildbereich 30 des Bildes ermittelt. Hierzu wird eine Ausgabeinformation einer Zwischenschicht des neuronalen Netzwerks 32, vorzugsweise des Encoder Netzwerks 34 des neuronalen Netzwerks 32 verwendet. Der zweite Bildbereich 30 entspricht dabei der Gefahrenquelle 14 auf der Fahrbahn 16 in dem Erfassungsbereich 22 und ist in Figur 6 gezeigt. Weitere Details zum Schritt S18 werden in Verbindung mit Figur 4 weiter unten noch näher beschrieben. Anschließend wird der Ablauf im Schritt S20 beendet.

Figur 3 zeigt ein Flussdiagramm eines detaillierten Ablaufs zum Ermitteln eines ersten Bereichs auf der Fahrbahn 16 unter Verwendung des neuronalen Netzwerks 32 im Schritt S16 nach Figur 2.

Im Schritt S100 wird der Ablauf gestartet. Anschließend werden im Schritt S102 die im Schritt S14 erzeugten Bilddaten unter Verwendung des neuronalen Netzwerks 32 verarbeitet, um erste Merkmalsvektoren zu ermitteln. Hierzu werden alle Schichten des neuronalen Netzwerks 32 verwendet. Die ersten Merkmalsvektoren sind in einer Matrix angeordnet und sind eine für die weitere Verarbeitung besonders geeignete Darstellung der in dem Bild des Erfassungsbereichs 22 enthaltenden Informationen. Im Schritt S104 erfolgt mittels der ersten Merkmalsvektoren eine semantische Segmentierung des Bildes. Dabei werden inhaltlich zusammenhängende Bildbereiche des Bildes ermittelt. Anschließend wird im Schritt S106 auf Grundlage der im Schritt 104 erfolgten semantischen Segmentierung des Bildes der erste Bildbereich 28, welcher der Fahrbahn 16 in dem Erfassungsbereich 22 entspricht, ermittelt. Schließlich wird der Ablauf im Schritt S108 beendet.

Figur 4 zeigt ein Flussdiagramm mit einem detaillierten Ablauf des Schrittes S18 nach Figur 2.

Im Schritt S200 wird der Ablauf gestartet. Anschließend wird im Schritt S202 unter Verwendung einer Ausgabeinformation einer Zwischenschicht des neuronalen Netzwerks 32 für vorbestimmte Teilbereiche des ersten Bildbereichs 28 jeweils ein zweiter Merkmalsvektor ermittelt. Diese Zwischenschicht des neuronalen Netzwerks 32 gehört zu dem Encoder Netzwerk 34 des neuronalen Netzwerks 32. Das Encoder Netzwerk 34 ermittelt folglich mittels der Bilddaten eine Darstellung in Form einer Matrix der zweiten Merkmalsvektoren des ersten Bildbereichs 28, die für eine weitere Verarbeitung besonders geeignet ist. Im Allgemeinen wird diese Darstellung eine geringere Auflösung als das Bild selbst haben, d.h. nicht für jeden Bildpunkt des ersten Bildbereichs 28 existiert genau ein zweiter Merkmalsvektor. Die Größe der vorbestimmten Teilbereiche hängt insbesondere von dem Verhältnis der Auflösung des Bildes zu der Auflösung der Darstellung, d.h. der Matrix der zweiten Merkmalsvektoren, ab. Beispielsweise kann jeweils ein vorbestimmter Teilbereich jeweils einem zweiten Merkmalsvektor der Darstellung entsprechen, wobei der Teilbereich wiederum mehreren Bildpunkten zugeordnet ist, die beispielsweise in einem rechteckigen Teilbereich des Bildes angeordnet sind.

Im Schritt S204 wird der Mittelwert aller den Bildpunkten des ersten Bildbereichs zugeordneten ersten Merkmalsvektoren gebildet. Anschließend wird im Schritt S206 für jeden der zweiten Merkmalsvektoren die Differenz zwischen dem Mittelwert und den zweiten Merkmalsvektoren ermittelt. Wenn der Wert dieser Differenz über, unter oder auf einem vorbestimmten Schwellenwert liegt, wird der dem jeweiligen zweiten Merkmalsvektor zugeordnete vorbestimmte Teilbereich dem zweiten Bildbereich zugeordnet. Nach dem die Differenz zwischen dem Mittelwert und den zweiten Merkmalsvektoren für alle zweiten Merkmalsvektoren ermittelt wurde, ist somit der zweite Bildbereich 30 ermittelt worden. Anschließend wird der Ablauf im Schritt S208 beendet.

Figur 5 zeugt eine schematische Darstellung des Bildes des Erfassungsbereiches 22. In der Darstellung nach Figur 5 ist der erste Bereich 28 der Fahrbahn 16 hervorgehoben. In Figur 5 sind ferner eine erste Koordinatenachse X und eine zweite Koordinatenachse Y der Bildpunkte des Bildes dargestellt. In der beispielhaften Darstellung nach Figur 5 reicht er bis zum Wert 200 der zweiten Koordinatenachse Y. Seitlich der Fahrbahn 16 sind Bäume angeordnet. Ferner sind seitlich und teilweise auf der Fahrbahn 16 weitere Fahrzeuge angeordnet. Sofern die Fahrzeuge auf der Fahrbahn 16 oder teilweise auf der Fahrbahn 16 angeordnet sind, sind die Bereiche der Fahrbahn 16, auf denen die Fahrzeuge die Fahrbahn 16 im Bild verdecken, von dem ersten Bereich 28 ausgenommen. Auf der Fahrbahn 16 befindet sich die Gefahrenquelle 14, die in dem Figuren 5 und 6 beispielhaft als eine verletzte Person gezeigt ist.

Figur 6 zeugt eine weitere schematische Darstellung des Bildes des Erfassungsbereiches 22. Die Darstellung nach Figur 6 entspricht im Wesentlichen der Darstellung nach Figur 5, jedoch ist in Figur 6 ist der zweite Bereich 30 der Fahrbahn 16 hervorgehoben.

Figur 7 zeigt eine schematische Darstellung des neuronalen Netzwerks 32, das in den Schritten S102 nach Figur 3 und S202 nach Figur 4 zum Ermitteln des ersten Bildbereichs 28 und des zweiten Bildbereichs 30 verwendet wird. Das neuronale Netzwerk 32 umfasst das Encoder Netzwerk 34 und das Decoder Netzwerk 36, die ihrerseits wieder aus mehreren Schichten (layers) bestehen.

Das Encoder Netzwerk 34 besteht aus mehreren Faltungsschichten 36 (Convolutional Layer) und Pooling-Schichten 40 (Pooling Layer), von denen der Übersicht halber in Figur 7 jeweils nur eine Schicht dargestellt ist. Das Vorhandensein von Faltungsschichten macht das neuronale Netzwerk 32 zu einem sogenannten faltenden neuronalen Netzwerk. Das Encoder Netzwerk 34 hat die Bilddaten als Eingabe und ermittelt aus diesen Bilddaten eine Darstellung des Bildes in Form einer Matrix von Merkmalsvektoren.

Das Decoder Netzwerk 36 besteht ebenfalls aus mehreren Schichten, die der Übersicht halber in Figur 7 nicht einzeln dargestellt sind. Die Ausgabe des Netzwerks 32 ist eine Darstellung der Bilddaten in Form einer Matrix von Merkmalsvektoren, die eine semantische Segmentierung dieser Bilddaten erlaubt. Insbesondere erlaubt diese Darstellung das Ermitteln des ersten Teilbereichs 28.

Anhand der Figuren 1 bis 7 sind das erfindungsgemäße Verfahren und die erfindungsgemäße Vorrichtung anhand einer Ausführungsform beispielhaft beschrieben. Insbesondere befindet sich der Erfassungsbereich 22 in der gezeigten Ausführungsform vor dem Fahrzeug 10 ermittelt. Es versteht sich von selbst, dass die gezeigten Ausführungsformen des Verfahrens entsprechend auch auf einen Bereich hinter dem Fahrzeug 10 anwendbar sind.

### Bezugszeichenliste

- 10: Fahrzeug
- 12: Vorrichtung
- 14: Gefahrenquelle
- 16: Fahrbahn
- 18: Kamera
- 20: Koordinatenkreuz
- 22: Erfassungsbereich
- 24: Bildverarbeitungs- und Auswerteeinheit
- 26: Kabel
- 28, 30: Bildbereich
- 32: Neuronales Netzwerk
- 34: Encoder Netzwerk
- 36: Decoder Netzwerk
- 38: Faltungsschicht
- 40: Pooling-Schicht

## Patentansprüche

1. Verfahren zum Ermitteln einer Gefahrenquelle (14) auf einer Fahrbahn (16) in einem Erfassungsbereich (22) vor oder hinter einem Fahrzeug (10), insbesondere eines Straßenfahrzeugs (10), mittels einer Kamera (18) des Fahrzeugs (10), bei dem mittels der Kamera (18) ein Bild des Erfassungsbereichs (22) erfasst wird,
dem Bild entsprechende Bilddaten erzeugt werden,
mittels der Bilddaten unter Verwendung eines neuronalen Netzwerks (32) ein erster Bildbereich (28) des Bildes ermittelt wird, welcher der Fahrbahn (16) in dem Erfassungsbereich (22) entspricht,
mithilfe des ersten Bildbereichs (28) unter Verwendung des neuronalen Netzwerks (32) ein zweiter Bildbereich (30) des Bildes ermittelt wird, welcher der Gefahrenquelle (14) auf der Fahrbahn (16) in dem Erfassungsbereich (22) entspricht **dadurch gekennzeichnet, dass**
mithilfe des ersten Bildbereichs (28) unter Verwendung einer Ausgabeinformation einer Zwischenschicht des neuronalen Netzwerks (32) der zweite Bildbereich (30) ermittelt wird,
dass mittels der Bilddaten unter Verwendung des neuronalen Netzwerks (32) für jeden Bildpunkt des Bildes jeweils ein erster Merkmalsvektor ermittelt wird und mittels dieser ersten Merkmalsvektoren der erste Bildbereich (28) ermittelt wird, und
dass unter Verwendung des neuronalen Netzwerks (32) für den ersten Bildbereich (28) zweite Merkmalsvektoren ermittelt werden, wobei ein Mittelwert der den Bildpunkten des ersten Bildbereichs zugeordneten zweiten Merkmalsvektoren ermittelt wird und unter Verwendung dieses Mittelwerts und der zweiten Merkmalsvektoren der zweite Bildbereich (30) ermittelt wird.

2. Verfahren nach Anspruch 1, **dadurch gekennzeichnet, dass** das neuronale Netzwerk (32) zumindest ein Encoder Netzwerk und ein Decoder Netzwerk umfasst.

3. Verfahren nach Anspruch 1 oder 2, **dadurch gekennzeichnet, dass** für jeden der zweiten Merkmalsvektoren die Differenz zwischen dem Mittelwert von allen zum ersten Bildbereich (28) gehörenden zweiten Merkmalsvektoren und dem jeweiligen zweiten Merkmalsvektor ermittelt wird und wenn der Wert dieser Differenz über, unter oder auf einem vorbestimmten Schwellenwert liegt, ein dem jeweiligen zweiten Merkmalsvektor zugeordneter vorbestimmter Teilbereich des Bilds dem zweiten Bildbereich (30) zugeordnet wird.

4. Verfahren nach einem der Ansprüche 1 bis 3, **dadurch gekennzeichnet, dass** mithilfe des ersten Bildbereichs (28) unter Verwendung einer Ausgabeinformation eines Encoder Netzwerks (34) des neuronalen Netzwerks (32) der zweite Bildbereich (30) ermittelt wird.

5. Verfahren nach einem der Ansprüche 1 bis 4, **dadurch gekennzeichnet, dass** mittels der Bilddaten unter Verwendung des neuronalen Netzwerks (32) dem ersten Bereich (28) zugeordnete Bildpunkte des Bildes ermittelt werden.

6. Verfahren nach einem der Ansprüche 1 bis 5, **dadurch gekennzeichnet, dass** das neuronale Netzwerk (32) ein faltendes neuronales Netzwerk ist.

7. Verfahren nach einem der Ansprüche 1 bis 6, **dadurch gekennzeichnet, dass** das neuronale Netzwerk (32) mittels Bildern realer, insbesondere typischer, Verkehrssituationen trainiert wurde, die mittels der Kamera (18) des Fahrzeugs (10) oder einer Kamera eines weiteren Fahrzeugs aufgenommenen worden sind.

8. Verfahren nach einem der Ansprüche 1 bis 7, **dadurch gekennzeichnet, dass** mittels der Bilddaten ein die Gefahrenquelle (14) umgebender Hüllkörper ermittelt wird.

9. Verfahren nach einem der Ansprüche 1 bis 8, **dadurch gekennzeichnet, dass** die Gefahrenquelle (14) mittels der Bilddaten unter Verwendung eines Bilderkennungsverfahrens, insbesondere eines weiteren neuronalen Netzwerks, klassifiziert wird.

10. Vorrichtung zum Ermitteln einer Gefahrenquelle (14) auf einer Fahrbahn (16) in einem Erfassungsbereich (22) vor oder hinter einem Fahrzeug (10), insbesondere eines Straßenfahrzeugs (10), mittels einer Kamera (18) des Fahrzeugs (10), mit der Kamera (18), die ausgebildet ist, ein Bild des Erfassungsbereichs (22) zu erfassen, einer Bildverarbeitungs- und Auswerteeinheit, die ausgebildet ist, dem Bild entsprechende Bilddaten zu erzeugen, mittels der Bilddaten unter Verwendung eines neuronalen Netzwerks (32) einen ersten Bildbereich (28) des Bildes zu ermitteln, welcher der Fahrbahn (16) in dem Erfassungsbereich (22) entspricht, mithilfe des ersten Bildbereichs (28) unter Verwendung des neuronalen Netzwerks (32) einen zweiten Bildbereich des Bildes zu ermitteln, welcher der Gefahrenquelle (14) auf der Fahrbahn (16) in dem Erfassungsbereich (22) entspricht,
**dadurch gekennzeichnet, dass**
die Bildverarbeitungs- und Auswerteeinheit ferner dazu ausgebildet ist, mithilfe des ersten Bildbereichs (28) unter Verwendung einer Ausgabeinformation einer Zwischenschicht des neuronalen Netzwerks (32) den zweiten Bildbereich (30) zu ermitteln, mittels der Bilddaten unter Verwendung des neuronalen Netzwerks (32) für jeden Bildpunkt des Bildes jeweils einen ersten Merkmalsvektor zu ermitteln und mittels dieser ersten Merkmalsvektoren den ersten Bildbereich (28) zu ermitteln, unter Verwendung des neuronalen Netzwerks (32) für den ersten Bildbereich (28) zweite Merkmalsvektoren zu ermitteln, einen Mittelwert der den Bildpunkten des ersten Bildbereichs zugeordneten zweiten Merkmalsvektoren zu ermitteln und unter Verwendung dieses Mittelwerts und der zweiten Merkmalsvektoren der zweite Bildbereich (30) zu ermitteln.

## Claims

1. Method for identifying a source of danger (14) on a road (16) in a detection area (22) in front of or behind a vehicle (10), in particular a road vehicle (10), by means of a camera (18) of the vehicle (10), in which an image of the detection area (22) is acquired by means of the camera (18),
image data corresponding to the image are generated,
a first image area (28) of the image, which corresponds to the road (16) in the detection area (22), is determined by means of the image data using a neural network (32), a second image area (30) of the image, which corresponds to the source of danger (14) on the road (16) in the detection area (22), is determined with the aid of the first image area (28) using the neural network (32), **characterized in that**
the second image area (30) is determined with the aid of the first image area (28) using output information from an intermediate layer of the neural network (32),
**in that** a first feature vector is respectively determined for each pixel of the image by means of the image data using the neural network (32), and the first image area (28) is determined by means of these first feature vectors, and
**in that** second feature vectors are determined for the first image area (28) using the neural network (32), wherein an average value of the second feature vectors assigned to the pixels of the first image area is determined, and the second image area (30) is determined using this average value and the second feature vectors.

2. Method according to Claim 1, **characterized in that** the neural network (32) comprises at least an encoder network and a decoder network.

3. Method according to Claim 1 or 2, **characterized in that**, for each of the second feature vectors, the difference between the average value of all the second feature vectors belonging to the first image area (28) and the respective second feature vector is determined, and, if the value of this difference is above, below or at a predetermined threshold value, a predetermined portion of the image assigned to the respective second feature vector is assigned to the second image area (30).

4. Method according to one of Claims 1 to 3, **characterized in that** the second image area (30) is determined with the aid of the first image area (28) using output information from an encoder network (34) of the neural network (32).

5. Method according to one of Claims 1 to 4, **characterized in that** pixels of the image that are assigned to the first area (28) are determined by means of the image data using the neural network (32).

6. Method according to one of Claims 1 to 5, **characterized in that** the neural network (32) is a convolutional neural network.

7. Method according to one of Claims 1 to 6, **characterized in that** the neural network (32) was trained by means of images of real, in particular typical, traffic situations, which have been recorded by means of the camera (18) of the vehicle (10) or a camera of a further vehicle.

8. Method according to one of Claims 1 to 7, **characterized in that** a bounding body surrounding the source of danger (14) is determined by means of the image data.

9. Method according to one of Claims 1 to 8, **characterized in that** the source of danger (14) is classified by means of the image data using an image recognition method, in particular a further neural network.

10. Device for identifying a source of danger (14) on a road (16) in a detection area (22) in front of or behind a vehicle (10), in particular a road vehicle (10), by means of a camera (18) of the vehicle (10), having the camera (18) which is designed to acquire an image of the detection area (22), an image processing and evaluation unit which is designed to generate image data corresponding to the image, to determine a first image area (28) of the image, which corresponds to the road (16) in the detection area (22), by means of the image data using a neural network (32), and to determine a second image area of the image, which corresponds to the source of danger (14) on the road (16) in the detection area (22), with the aid of the first image area (28) using the neural network (32),
**characterized in that**
the image processing and evaluation unit is further designed to determine the second image area (30) with the aid of the first image area (28) using output information from an intermediate layer of the neural network (32), to respectively determine a first feature vector for each pixel of the image by means of the image data using the neural network (32), and to determine the first image area (28) by means of these first feature vectors, to determine second feature vectors for the first image area (28) using the neural network (32), to determine an average value of the second feature vectors assigned to the pixels of the first image area, and to determine the second image area (30) using this average value and the second feature vectors.

## Revendications

1. Procédé de détermination d'une source de danger (14) sur une chaussée (16) dans une région de détection (22) devant ou derrière un véhicule (10), en particulier un véhicule routier (10), au moyen d'une caméra (18) du véhicule (10), dans lequel
une image de la région de détection (22) est détectée au moyen de la caméra (18),
des données d'image correspondant à l'image sont générées,
une première région d'image (28) de l'image correspondant à la chaussée (16) dans la région de détection (22) est déterminée à l'aide des données d'image en utilisant un réseau neuronal (32),
une deuxième région d'image (30) de l'image correspondant à la source de danger (14) sur la chaussée (16) dans la région de détection (22) est déterminée à l'aide de la première région d'image (28) en utilisant le réseau neuronal (32),
**caractérisé en ce que**
la deuxième région d'image (30) est déterminée à l'aide de la première région d'image (28) en utilisant une information de sortie d'une couche intermédiaire du réseau neuronal (32),
**en ce qu'**un premier vecteur de caractéristique est déterminé à l'aide des données d'image en utilisant le réseau neuronal (32) pour chaque pixel de l'image et **en ce que** la première région d'image (28) est déterminée à l'aide desdits premiers vecteurs de caractéristique,
et
**en ce que** des deuxièmes vecteurs de caractéristique sont déterminés pour la première région d'image (28) en utilisant le réseau neuronal (32), dans lequel une moyenne des deuxièmes vecteurs de caractéristique associés aux pixels de la première région d'image est déterminée et la deuxième région d'image (30) est déterminée en utilisant ladite moyenne et les deuxièmes vecteurs de caractéristique.

2. Procédé selon la revendication 1, **caractérisé en ce que** le réseau neuronal (32) comprend au moins un réseau encodeur et un réseau décodeur.

3. Procédé selon la revendication 1 ou 2, **caractérisé en ce que**, pour chacun des deuxièmes vecteurs de caractéristique, la différence entre la valeur moyenne de tous les deuxièmes vecteurs de caractéristique appartenant à la première région d'image (28) et le deuxième vecteur de caractéristique respectif est déterminée et, si la valeur de ladite différence est supérieure, inférieure ou égale à une valeur de seuil prédéterminée, une sous-région prédéterminée, associée au deuxième vecteur de caractéristique respectif, de l'image est associée à la deuxième région d'image (30).

4. Procédé selon l'une quelconque des revendications 1 à 3, **caractérisé en ce que** la deuxième région d'image (30) est déterminée à l'aide de la première région d'image (28) en utilisant une information de sortie d'un réseau encodeur (34) du réseau neuronal (32).

5. Procédé selon l'une quelconque des revendications 1 à 4, **caractérisé en ce que** des pixels de l'image associés à la première région (28) sont déterminés au moyen des données d'image en utilisant le réseau neuronal (32).

6. Procédé selon l'une quelconque des revendications 1 à 5, **caractérisé en ce que** le réseau neuronal (32) est un réseau neuronal convolutif.

7. Procédé selon l'une quelconque des revendications 1 à 6, **caractérisé en ce que** le réseau neuronal (32) a été entrainé au moyen d'images de situations de circulation réelles, en particulier typiques, enregistrées au moyen de la caméra (18) du véhicule (10) ou d'une caméra d'un autre véhicule.

8. Procédé selon l'une quelconque des revendications 1 à 7, **caractérisé en ce qu'**un corps d'enveloppe entourant la source de danger (14) est déterminé au moyen des données d'image.

9. Procédé selon l'une quelconque des revendications 1 à 8, **caractérisé en ce que** la source de danger (14) est classée au moyen des données d'image en utilisant un procédé de reconnaissance d'image, en particulier un autre réseau neuronal.

10. Dispositif permettant de déterminer une source de danger (14) sur une chaussée (16) dans une région de détection (22) devant ou derrière un véhicule (10), en particulier un véhicule routier (10), au moyen d'une caméra (18) du véhicule (10), comprenant la caméra (18) qui est conçue pour détecter une image de la région de détection (22), une unité de traitement et d'évaluation d'image qui est conçue pour générer des données d'image correspondant à l'image, pour déterminer, au moyen des données d'image et en utilisant un réseau neuronal (32), une première région d'image (28), correspondant à la chaussée (16) dans la région de détection (22), de l'image, pour déterminer, à l'aide de la première région d'image (28) et en utilisant le réseau neuronal (32), une deuxième région d'image, correspondant à la source de danger (14) sur la chaussée (16) dans la région de détection (22), de l'image,
**caractérisé en ce que**
l'unité de traitement et d'évaluation d'image est en outre conçue pour déterminer la deuxième région d'image (30) à l'aide de la première région d'image (28) en utilisant une information de sortie d'une couche intermédiaire du réseau neuronal (32), pour déterminer respectivement un premier vecteur de caractéristique pour chaque pixel de l'image à l'aide des données d'image en utilisant le réseau neuronal (32) et pour déterminer la première région d'image (28) à l'aide dudit premier vecteur de caractéristique, pour déterminer des deuxièmes vecteurs de caractéristique pour la première région d'image (28) en utilisant le réseau neuronal (32), pour déterminer une valeur moyenne des deuxièmes vecteurs de caractéristique associés aux pixels de la première région d'image et pour déterminer la deuxième région d'image (30) en utilisant ladite valeur moyenne et les deuxièmes vecteurs de caractéristique.
